# EUROPEAN PATENT APPLICATION

(11) **EP 2 926 927 A2**
(43) Date of publication of application: **07.10.2015**
(21) Application number: 15161699.2
(22) Date of filing: 30.03.2015
(51) Int. Cl.: B22F 3/105

(54) **THREE-DIMENSIONAL ADDITIVE MANUFACTURING DEVICE AND THREE-DIMENSIONAL ADDITIVE MANUFACTURING METHOD**

(30) Priority: 31.03.2014 JP 2014073182
(71) Applicant: JEOL Ltd., Akishima, Tokyo 196 (JP)
(72) Inventor: Yamada, Masahiro, Akishima, Tokyo 196-8558 (JP)
(74) Representative: Boult Wade Tennant

(57) **Abstract**

To provide a three-dimensional additive manufacturing device and a three-dimensional additive manufacturing method in which a completed shaped object can be taken out without staining a shaping chamber.

A three-dimensional additive manufacturing device 1 includes a shaping chamber 2, a shaping box 3, a stage 4, and a box support body 6. The shaping box 3 accommodates a shaped object P1 and a powder sample Ml for forming the shaped object. The box support body 6 is provided inside the shaping chamber 2 and detachably supports the shaping box 3.

## Description

### BACKGROUND OF THE INVENTION

### Field of the Invention:

The present invention relates to a three-dimensional additive manufacturing device which laminates and shapes layers in each of which a powder sample is thinly spread one by one on a stage and a three-dimensional additive manufacturing method.

### Description of the Related Art:

Recently, a three-dimensional additive manufacturing technology for laminating and shaping layers in each of which a powder sample is thinly spread one by one attracts attention, and many types of three-dimensional additive manufacturing technologies have been developed due to differences in materials of the powder samples and shaping methods.

As a shaping method of prior-art three-dimensional additive manufacturing devices, a powder sample is spread on an upper surface of a stage which is a powder table for each layer, for example. Subsequently, in the powder sample spread on the stage, only a two-dimensional structure portion corresponding to one section of a shaped object is molten by a melting mechanism composed of an electron beam or a laser. Then, by laminating the layers of such powder sample in a height direction (Z-direction) one by one, the shaped object is formed (see Japanese Patent Laid-Open No. 2008-255488, for example).

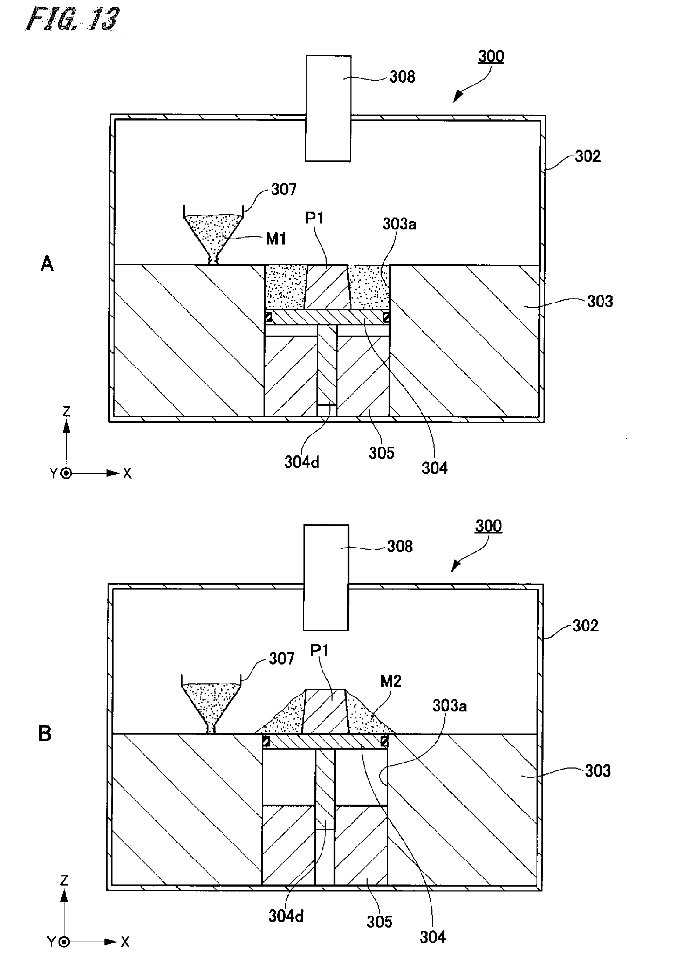

Subsequently, an example of the prior-art three-dimensional additive manufacturing device will be described by referring to Figs. 13A and 13B.

Fig. 13A is a schematic sectional view illustrating a prior-art three-dimensional additive manufacturing device.

As illustrated in Fig. 13A, a prior-art three-dimensional additive manufacturing device 300 has a hollow shaping chamber 302 for performing shaping processing, a shaping frame 303 arranged in the shaping chamber 302, a stage 304, and a stage moving mechanism 305 supporting the stage 304, capable of elevation. Moreover, the three-dimensional additive manufacturing device 300 has a powder laminating portion 310 for supplying and laminating a metal powder M1 illustrating an example of the powder sample on one surface of the stage 304 and an electron gun 308 which is a melting mechanism for melting the metal powder M1.

At a center part of the shaping frame 303, a pit 303a is formed. The stage moving mechanism 305 is provided below the pit 303a. The stage moving mechanism 305 connects to a shaft portion 304d of the stage 304 and drives the stage 304 in a vertical direction.

In the prior-art three-dimensional additive manufacturing device 300, first, the stage 304 is arranged by the stage moving mechanism 305 at a position lowered by a predetermined height in the vertical direction from an upper surface of the shaping frame 303. Subsequently, the metal powder M1 having a predetermined thickness is spread by the powder laminating portion 310 on a surface of the stage 304.

Subsequently, an electron beam is emitted to the layer of the metal powder M1 from the electron gun 308 in accordance with a two-dimensional shape obtained by slicing the shaped object in design prepared in advance at predetermined thickness intervals. The metal powder M1 corresponding to the two-dimensional shape is molten by the electron beam emitted from the electron gun 308. The molten metal powder M1 is solidified after predetermined time according to a material has elapsed and becomes a solidified powder.

Subsequently, after one layer of the metal powder M1 has been molten and solidified, the stage 304 is lowered by the stage moving mechanism 305 by the predetermined height. Subsequently, the metal powder M1 is spread on the layer (lower layer) in which the metal powder M1 was spread immediately before. Then, the metal powder M1 in a region corresponding to the two-dimensional shape corresponding to the layer is irradiated with the electron beam to be molten and solidified. By repeating this series of processing so as to laminate layers of the molten and solidified metal powders M1, the shaped object PI is constructed.

Subsequently, a taking-out operation of the shaped object PI in the prior-art three-dimensional additive manufacturing device 300 will be described by referring to Fig. 13B.

Fig. 13B is a schematic sectional view illustrating the taking-out operation of the shaped object PI in the prior-art three-dimensional additive manufacturing device 300.

As illustrated in Fig. 13B, the stage 304 is raised upward in the vertical direction by the stage moving mechanism 305. The stage 304 is raised until one surface of the stage 304 reaches above the upper surface of the shaping frame 303 or on the same plane as the upper surface of the shaping frame 303. Thus, the shaped object PI stored in the pit 303a of the shaping frame 303 goes to an outside from the pit 303a. When cooling of the shaped object PI is finished, the shaped object PI is taken out of the shaping chamber 302.

However, in the prior-art three-dimensional additive manufacturing device, when the completed shaped object is to be taken out, since the stage is raised and the shaped object is taken out of the pit of the shaping frame in the shaping chamber, an unsolidified powder sample (hereinafter referred to as an "unnecessary powder") M2 adhering to the periphery of the shaped object PI is also pushed out of the pit. As a result, there is a problem that an inside of the shaping chamber is stained by the unnecessary powders pushed out of the pit.

An object of the present invention is, in view of the above-described problem, to provide a three-dimensional additive manufacturing device from which the completed shaped object can be taken out without staining the shaping chamber and a three-dimensional additive manufacturing method.

### SUMMARY OF THE INVENTION

In order to solve the above-described problem and to achieve the object of the present invention, a three-dimensional additive manufacturing device of the present invention includes a hollow shaping chamber, a shaping box, a stage, and a box support body. In the shaping chamber, processing for forming a shaped object is performed. The shaping box accommodates the shaped object and a powder sample for forming the shaped object. The stage is fitted inside the shaping box, movably in a vertical direction, and the powder sample is spread thereon. The box support body is provided inside the shaping chamber and detachably supports the shaping box.

In the three-dimensional additive manufacturing device with the above-described configuration, the shaping box is detachably supported by the box support body and thus, it can be removed from the box support body in a state in which the shaped object and the powder sample are accommodated. As a result, the shaped object can be taken out of the shaping chamber without pushing out the completed shaped object from the shaping box.

Moreover, a three-dimensional additive manufacturing method of the present invention includes the steps of (1) to (2) below:
(1) forming a shaped object inside a shaping chamber and accommodating the shaped object and a powder sample forming the shaped object inside a shaping box; and
(2) removing the shaping box accommodating the shaped object and the powder sample from a box support body detachably supporting the shaping box.

According to the three-dimensional additive manufacturing device and the three-dimensional additive manufacturing method of the present invention, it is possible to prevent unsolidified powder sample from staining the inside of the shaping chamber.

### BRIEF DESCRIPTION OF THE DRAWINGS

[Fig. 1] Fig. 1 is an explanatory view schematically illustrating a three-dimensional additive manufacturing device according to a first embodiment of the present invention;
[Fig. 2] Fig. 2 is an explanatory view illustrating a state of removing a completed shaped object from a shaping chamber in the three-dimensional additive manufacturing device according to the first embodiment of the present invention;
[Fig. 3] Fig. 3 is an explanatory view schematically illustrating a three-dimensional additive manufacturing device according to a second embodiment of the present invention;
[Fig. 4] Fig. 4 is an explanatory view illustrating a replacing operation of a shaping box in the three-dimensional additive manufacturing device according to the second embodiment of the present invention;
[Fig. 5] Fig. 5 is an explanatory view illustrating a replacing operation of the shaping box in the three-dimensional additive manufacturing device according to the second embodiment of the present invention;
[Fig. 6] Fig. 6 is an explanatory view illustrating a replacing operation of the shaping box in the three-dimensional additive manufacturing device according to the second embodiment of the present invention;
[Fig. 7] Fig. 7 is an explanatory view illustrating a replacing operation of the shaping box in the three-dimensional additive manufacturing device according to the second embodiment of the present invention;
[Fig. 8] Fig. 8 is an explanatory view illustrating a replacing operation of the shaping box in the three-dimensional additive manufacturing device according to the second embodiment of the present invention;
[Fig. 9] Fig. 9 is an explanatory view illustrating a replacing operation of the shaping box in the three-dimensional additive manufacturing device according to the second embodiment of the present invention;
[Fig. 10] Fig. 10 is an explanatory view illustrating a replacing operation of the shaping box in the three-dimensional additive manufacturing device according to the second embodiment of the present invention;
[Fig. 11] Figs. 11A to 11D are explanatory views illustrating a use example of a treatment chamber in the three-dimensional additive manufacturing device according to the second embodiment of the present invention;
[Fig. 12] Fig. 12 is an explanatory view illustrating a three-dimensional additive manufacturing method according to a third embodiment of the present invention; and
[Fig. 13] Figs. 13A and 13B illustrate a three-dimensional additive manufacturing device according to a prior-art technology, in which Fig. 13A is a schematic sectional view and Fig. 13B is an explanatory view illustrating an operation when a completed shaped object is to be taken out.

### DESCRIPTION OF THE PREFERRED EMBODIMENTS

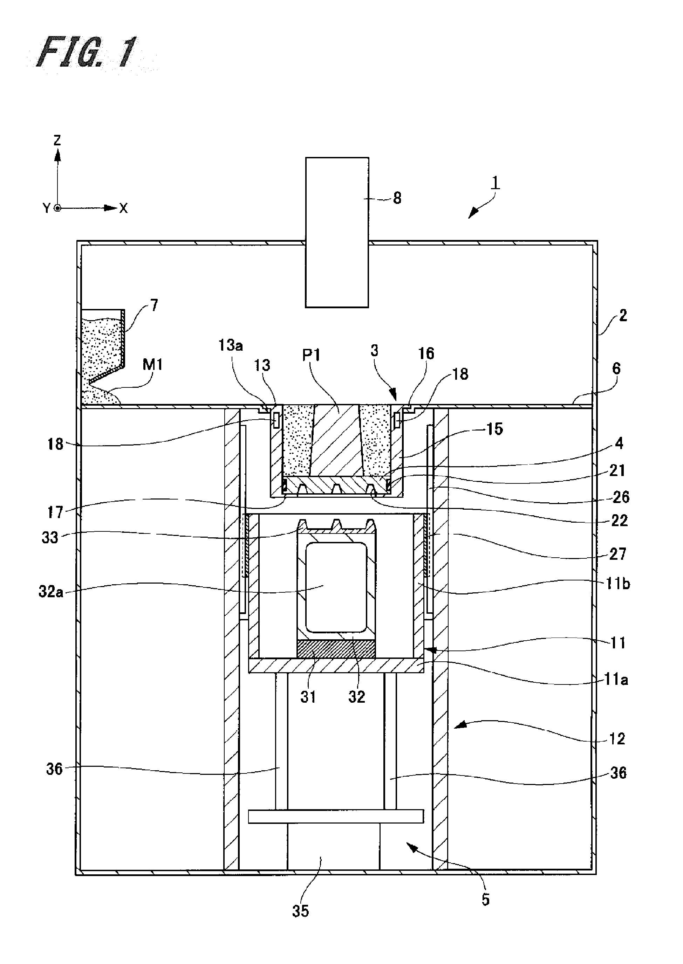

An embodiment of a three-dimensional additive manufacturing device of the present invention will be described by referring to Figs. 1 to 12. The same reference numerals are given to common members in each figure. Moreover, though explanation will be made in the following order, the present invention is not necessarily limited to the form below.
1. First embodiment
   1-1. Configuration of three-dimensional additive manufacturing device
   1-2. Operation of three-dimensional additive manufacturing device
2. Second embodiment
3. Third embodiment

### 1. First embodiment

### 1-1. Configuration of three-dimensional additive manufacturing device

First, a first embodiment of a three-dimensional additive manufacturing device of the present invention will be described by referring to Fig. 1.

Fig. 1 is a schematic sectional view schematically illustrating the three-dimensional additive manufacturing device of this embodiment.

A three-dimensional additive manufacturing device 1 illustrated in Fig. 1 is a device for shaping a three-dimensional object by irradiating a powder sample made of metal powders such as titanium, aluminum, and iron, for example, with an electron beam to melt the powder sample, and by laminating layers in which this powder sample is solidified.

The three-dimensional additive manufacturing device 1 has a hollow shaping chamber 2, a shaping box 3, a stage 4, a stage moving mechanism 5 for movably supporting the stage 4, a box support body 6 for detachably supporting the shaping box 3, a powder laminating portion 7, and an electron gun 8. The electron gun 8 illustrates a specific example of a melting mechanism of the present invention. Moreover, the three-dimensional additive manufacturing device 1 has a stage support body 11 and two guide walls 12. In Fig. 1, a vertical direction is assumed to be the Z-direction, a first direction perpendicular to the Z-direction is assumed to be the X-direction, and a second direction perpendicular to the Z-direction and the X-direction is assumed to be the Y-direction.

The shaping chamber 2 is formed into a hollow box shape. A vacuum pump, not shown, is connected to this shaping chamber 2. By exhausting an atmosphere in the shaping chamber 2 by the vacuum pump, the inside of the shaping chamber 2 is maintained in vacuum. In this shaping chamber 2, the shaping box 3, the stage 4, the stage moving mechanism 5, and the powder laminating portion 7 are provided.

Moreover, the box support body 6 is arranged in the shaping chamber 2. The box support body 6 is formed into a substantially flat plate shape. The box support body 6 partitions a space in the shaping chamber 2 in the Z-direction into two parts. Moreover, an attachment hole 13 penetrating in the Z-direction is provided in the box support body 6. One side of the attachment hole 13 in the Y-direction is open. Moreover, a support portion 13a detachably supporting the shaping box 3, which will be described later, is provided on both end portions on an outer edge of the attachment hole 13 in the X-direction.

The shaping box 3 is formed cylindrically with both ends in an axial direction open. Moreover, the shaping box 3 accommodates a metal powder M1 supplied by the powder laminating portion 7 which will be described later and the shaped object PI formed of the metal powder M1. The shaping box 3 has a cylinder portion 15, an outer flange portion 16 provided on an upper end of the cylinder portion 15, and a stopper 17 provided on a lower end of the cylinder portion 15. The shaping box 3 is detachably supported by the box support body 6 in an attitude with the axial direction of the cylinder portion 15 substantially in parallel with the Z-direction. The metal powder M1 is laminated in a cylinder hole of the cylinder portion 15.

Insertion holes 18 are provided in two sides facing each other in the cylinder portion 15 in the X-direction. A conveying arm 101 of a conveying mechanism 100 which will be described later is inserted into the insertion hole 18.

The outer flange portion 16 illustrating a specific example of an attachment portion on the box side of the present invention protrudes toward an outer side of the cylinder portion 15 and extends in a horizontal direction. The outer flange portion 16 is placed on the support portion 13a of the box support body 6. It is only necessary that the outer flange portion 16 is formed at least on two sides of four sides on the upper end of the cylinder portion 15.

The stopper 17 protrudes from the lower end of the cylinder portion 15 toward an inner side of the cylinder portion 15 and extends in the horizontal direction. It is only necessary that the stopper 17 is formed at least on one side of the four sides on the lower end of the cylinder portion 15. The stopper 17 regulates movement of the stage 4 downward in the Z-direction by abutting against the stage 4. This can prevent the stage 4 from dropping from an opening on the lower end of the shaping box 3 in the vertical direction.

An inner surface of the cylinder portion 15 is coated. A material of this coating is preferably a material that does not easily react with the metal powder M1, and zirconia can be used, for example. Moreover, metal with a melting point higher than that of the metal powder M1, such as tungsten and tantalum, for example, also does not easily react with the metal powder M and thus, they are preferable. By applying such coating, the metal powder M can be prevented from being sintered to the cylinder portion 15 (shaping box 3). The coating to be applied to the cylinder portion 15 includes bonding of sheet-state metal. Moreover, the stage 4 is movably fitted with the cylinder portion 15.

The stage 4 is formed into a shape corresponding to a shape of the cylinder hole of the cylinder portion 15 and it is formed into a substantially square flat plate shape in this embodiment. The stage 4 is supported by the shaping box 3 so that one surface thereof becomes substantially parallel with a horizontal surface formed by the X-direction and the Y-direction. The metal powder M1 is laminated on the one surface of the stage 4.

Moreover, a seal member 21 having heat resistance and flexibility is provided on a side end portion of the stage 4. The seal member 21 is in slidable contact with an inner wall surface of the cylinder portion 15. By means of the seal member 21, a space on a lower part and a space on an upper part in the stage 4 in the vertical direction are formed as sealed spaces, respectively. Moreover, a stage-side connecting portion 22 is provided on the other surface (lower surface) on a side opposite to the one surface (upper surface) in the stage 4 on which the metal powder M1 is laminated. A connecting block 33 provided on a stage support body 11 which will be described later is detachably connected to the stage-side connecting portion 22.

The stage support body 11 is constituted by a plate-shaped bottom portion 11a having a surface in parallel with the surface of the stage 4 and side wall portions 11b provided upright in the Z-direction on the opposing sides in the X-direction of the bottom portion 11a and is constituted by a member having a U-shaped section with an upper part open.

A first insulating structural body 31 and a second insulating structural body 32 are provided on one surface facing the stage 4 in the bottom portion 11a. The stage support body 11 supports the stage 4 through an insulating structural body composed of the first insulating structural body 31 and the second insulating structural body 32 and is arranged so that the side wall portion 11b does not close a surface which becomes a taking-out port of the shaping box 3.

The first insulating structural body 31 and the second insulating structural body 32 are arranged in this order by being laminated on the bottom portion 11a of the stage support body 11. A material with low thermal conductivity can be used for the first insulating structural body 31, and a firebrick, ceramics and the like, for example, can be used. A metal material with low thermal conductivity can be used for the second insulating structural body 32, and stainless, for example, can be used. Moreover, in this embodiment, a space portion 32a is formed inside the second insulating structural body 32 so as to reduce weight and to suppress heat conduction.

Moreover, the connecting block 33 is provided on an upper end in the second insulating structural body 32, that is, on an upper part in the Z-direction. This connecting block 33 is detachably connected to the stage-side connecting portion 22 provided on the lower surface of the stage 4. The connecting block 33 and the stage-side connecting portion 22 constitute a specific example of a connecting mechanism of the present invention. By removing the connecting block 33 from the stage-side connecting portion 22, it is possible to remove the stage 4 together with the shaping box 3 from the box support body 6 and the stage support body 11.

Moreover, slide members 27 are provided on a surface and a surface on the opposite side facing each other in the two side wall portions 11b. The slide member 27 is slidably engaged with a guide portion 26 provided on a guide wall 12 which will be described later.

The two guide walls 12 are arranged on both ends in the X-direction by facing each other while sandwiching the stage support body 11. Moreover, the two guide walls 12 extend substantially in parallel with the Z-direction from one surface on a lower end side in the box support body 6 in the Z-direction. A guide portion 26 extending along the Z-direction is provided on each of the two guide walls 12. By slidably engaging the slide member 27 with the guide portion 26, the stage support body 11 and the stage 4 connected to the stage support body 11 are supported along the guide portion 26, that is, movably along the Z-direction.

The stage moving mechanism 5 is arranged between the two guide walls 12 and below the stage support body 11 in the Z-direction. The stage moving mechanism 5 has a motor 35 and two elevating arms 36. The motor 35 is fixed to a lower part of the shaping chamber 2 in the vertical direction. One ends of the two elevating arms 36 in the axial direction are fixed to the bottom portion 11a of the stage support body 11, while the other ends in the axial direction are connected to the motor 35. When the motor 35 is driven, the two elevating arms 36 expand/contract along the Z-direction. As a result, the stage support body 11 and the stage 4 connected to the stage support body 11 move along the Z-direction.

Various mechanisms such as a ball screw mechanism, a feed screw mechanism, a rack-and-pinion mechanism, a belt mechanism, and a mechanism using a linear motor can be employed, for example, for the stage moving mechanism 5.

The powder laminating portion 7 discharges the metal powder M1 on the one surface of the box support body 6. Then, the powder laminating portion 7 conveys the metal powder M1 to the stage 4 through an arm member, not shown, and spreads the metal powder M1 on the one surface of the stage 4.

The powder laminating portion 7 is not limited to that described above. For example, a mechanism may be employed in which a powder supply portion for discharging the metal powder M1 from above the stage 4 and a leveling plate for leveling the metal powder M1 discharged on the one surface of the stage 4 are provided.

The electron gun 8 is attached to an upper part of the shaping chamber 2 in the vertical direction. The electron gun 8 is arranged facing the one surface of the stage 4 in the upper part of the shaping chamber 2 in the Z-direction. An output value of the electron beam emitted from the electron gun 8 and a position that the electron gun 8 irradiates with the electron beam are determined by an electron gun driving control portion, not shown.

### 1-2. Operation of three-dimensional additive manufacturing device

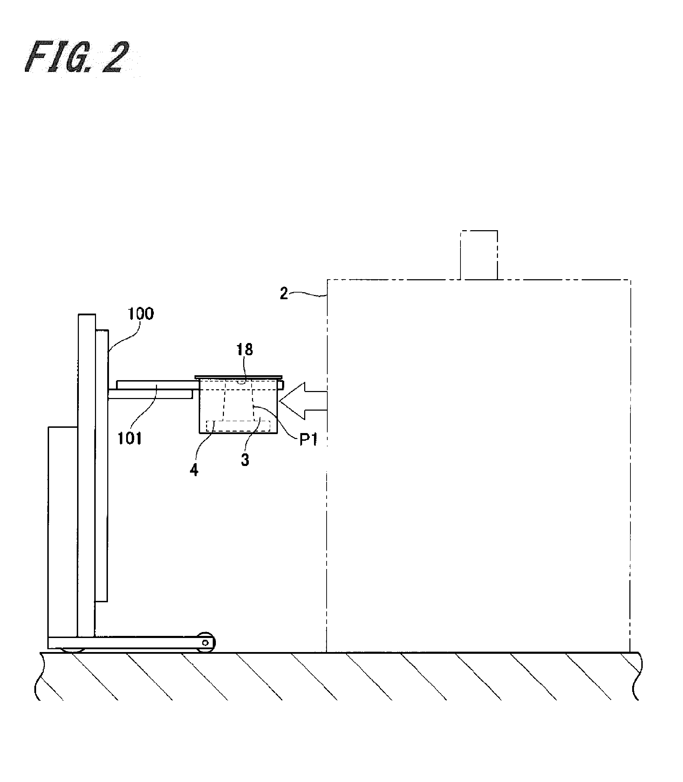

Subsequently, an operation of the three-dimensional additive manufacturing device 1 having the above-described configuration will be described by referring to Figs. 1 and 2.

Fig. 2 is an explanatory view illustrating a state of removing the completed shaped object from the shaping chamber 2.

First, as illustrated in Fig. 1, the shaping box 3 is inserted into the attachment hole 13 of the box support body 6, and the shaping box 3 is attached to the box support body 6. Subsequently, the stage moving mechanism 5 is driven to move the stage support body 11 upward in the vertical direction. Then, the connecting block 33 and the stage-side connecting portion 22 of the stage 4 are connected to each other.

Subsequently, by means of the stage moving mechanism 5, the stage 4 is arranged at a position lowered by a ΔZ portion in the vertical direction from the upper surface of the shaping box 3. This ΔZ corresponds to a layer thickness in the vertical direction of the metal powder M1 spread afterwards. Subsequently, the metal powder M1 for a thickness ΔZ portion is spread on the one surface of the stage 4 by the powder laminating portion 7.

Subsequently, the electron beam is emitted from the electron gun 8 to the metal powder M1. The electron gun 8 emits the electron beam to the metal powder M1 in accordance with a two-dimensional shape obtained by slicing the shaped object in design prepared in advance (shaped object expressed by three-dimensional CAD (Computer-Aided Design) data) at a ΔZ interval. The metal powder M1 on the region corresponding to the two-dimensional shape is molten by the electron beam emitted from the electron gun 8.

Subsequently, the molten metal powder M1 is solidified after predetermined time according to the material elapses.

After one layer of the metal powder M1 is molten and solidified, the stage 4 is lowered by the ΔZ portion by the stage moving mechanism 5. This movement of the stage 4 in the Z-direction is realized by sliding of the seal member 21 on the inner surface of the cylinder portion 15 of the shaping box 3.

Subsequently, the ΔZ portion of the metal powder M1 is spread on a layer (lower layer) having been spread immediately before by the powder laminating portion 7 again. By means of the electron beam emitted from the electron gun 8, the metal powder M1 on the region corresponding to the two-dimensional shape corresponding to that layer is molten and solidified. By repeating this series of processing so as to laminate layers of the molten and solidified metal powder M1, the shaped object PI is constructed. As a result, the shaped object PI and the metal powder M1 are accommodated in the cylinder portion 15 of the shaping box 3.

When the shaped object PI is completed, as illustrated in Fig. 1, the stage moving mechanism 5 is driven to move the stage support body 11 downward in the vertical direction. Then, the connection between the connecting block 33 and the stage-side connecting portion 22 of the stage 4 is released.

Subsequently, a door provided on one side in the shaping chamber 2 in the Y-direction is opened. As illustrated in Fig. 2, the conveying arm 101 of the conveying mechanism 100 is inserted into the shaping chamber 2. Then, the conveying arm 101 is inserted into the insertion hole 18 provided in the cylinder portion 15 of the shaping box 3, and the shaping box 3 is sandwiched by the conveying arm 101. Subsequently, the conveying arm 101 of the conveying mechanism 100 is pulled out of the shaping chamber 2. Here, the one side in the attachment hole 13 in the box support body 6 in the Y-direction is open. Thus, the outer flange portion 16 of the shaping box 3 slides along the Y-direction of the support portion 13a, and the shaping box 3 is taken out of the shaping chamber 2 together with the conveying arm 101.

When the shaping box 3 is sandwiched by the conveying arm 101 of the conveying mechanism 100, the shaping box 3 may be removed from the attachment hole 13 of the box support body 6 by lifting it upward in the vertical direction.

As a result, the completed shaped object PI can be taken out of the shaping chamber 2 together with the shaping box 3. As described above, by taking out the completed shaped object PI from the shaping chamber 2 in a state accommodated in the shaping box 3, the inside of the shaping chamber 2 is prevented from being stained by the metal powder laminated in the cylinder portion 15 of the shaping box 3 and adhering to the periphery of the shaped object PI (hereinafter referred to as the "unnecessary powder").

Moreover, since the inside of the shaping chamber 2 is not easily contaminated by the metal powder, the shaping box 3 to be used next can be quickly installed on the box support body 6. This can improve a throughput of shaping in the three-dimensional additive manufacturing device 1.

Moreover, since the unnecessary powder can be taken out of the shaping chamber 2 in the state accommodated in the shaping box 3, oxidization of the unnecessary powder can be prevented better than in the prior-art three-dimensional additive manufacturing device.

### 2. Second embodiment

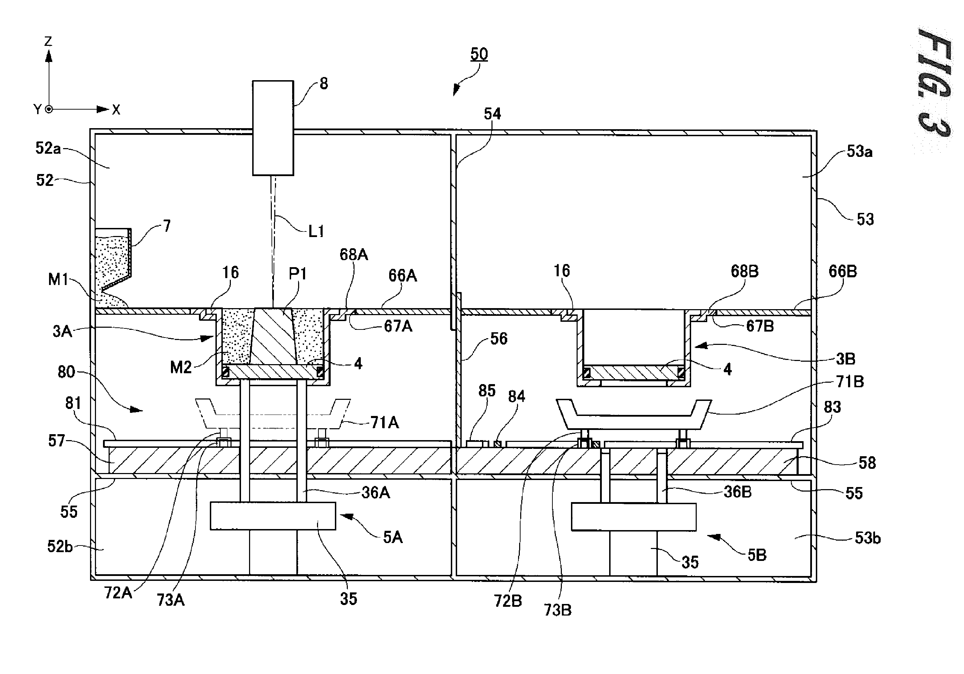

Subsequently, a second embodiment of the present invention will be described by referring to Figs. 3 to 11.

Fig. 3 is an explanatory view schematically illustrating a three-dimensional additive manufacturing device.

### 2-1. Configuration and operation of second embodiment

A three-dimensional additive manufacturing device 50 according to this second embodiment is different from the three-dimensional additive manufacturing device 1 according to the first embodiment in a point that a treatment chamber for performing secondary processing on the completed shaped object PI is made adjacent to the shaping chamber. Thus, here, the shaping chamber, the treatment chamber, and the conveying mechanism will be described, and the same reference numerals are given to common portions to those of the three-dimensional additive manufacturing device 1 according to the first embodiment, and duplicated explanation will be omitted.

As illustrated in Fig. 3, the three-dimensional additive manufacturing device 50 has a shaping chamber 52, a treatment chamber 53 for performing secondary processing on the completed shaped object PI, and a conveying mechanism 80. The shaping chamber 52 and the treatment chamber 53 are partitioned from each other by a partition wall 54. Moreover, a part of the partition wall 54 is open. The opening of the partition wall 54 is closed capable of being opened/closed by a partition door 56.

A wall portion 55 is provided below the shaping chamber 52 in the vertical direction. An internal space of the shaping chamber 52 is partitioned by the wall portion 55 to a vacuum portion 52a and a machine chamber 52b. Similarly, the wall portion 55 is provided below the treatment chamber 53 in the vertical direction, and an internal space of the treatment chamber 53 is partitioned by the wall portion 55 to a processing portion 53a and a machine chamber 53b.

Moreover, vacuum pumps, not shown, are connected to the vacuum portion 52a of the shaping chamber 52 and the processing portion 53a of the treatment chamber 53, respectively. By exhausting the atmosphere in the vacuum portion 52a and the processing portion 53a by the vacuum pump, the insides of the vacuum portion 52a and the processing portion 53a are maintained in vacuum.

The motor 35 of the stage moving mechanism 5A is fixed to the machine chamber 52b of the shaping chamber 52. The elevating arm 36A of the stage moving mechanism 5A penetrates the wall portion 55 and protrudes into the vacuum portion 52a. The elevating arm 36A is detachably connected to the stage 4 through the connecting mechanism, not shown. Similarly, the motor 35 of the stage moving mechanism 5B is fixed to the machine chamber 53b of the treatment chamber 53, and the elevating arm 36B penetrates the wall portion 55 and is detachably connected to the stage 4 through the connecting mechanism, not shown.

In the shaping chamber 52, a box support body 66A, the powder laminating portion 7, and the electron gun 8 are provided similarly to the shaping chamber 2 of the three-dimensional additive manufacturing device 1 according to the first embodiment.

In the box support body 66A, attachment holes 67A to which a first shaping box 3A and a second shaping box 3B are attached are provided. On both opposing end portions on an outer edge of the attachment hole 67A in the X-direction, a pair of chuck members 68A illustrating a specific example of the support portion are provided. On the chuck members 68A, outer flange portions 16 of the first shaping box 3A and the second shaping box 3B are placed. Moreover, the pair of chuck members 68A detachably support the first shaping box 3A and the second shaping box 3B by moving along the X-direction.

Similarly, a box support body 66B is provided also in the treatment chamber 53, and since its constitution is the same as that of the box support body 66A of the shaping chamber 52, the explanation will be omitted.

The first shaping box 3A installed on the shaping chamber 52 side and the second shaping box 3B installed on the treatment chamber 53B side have the same constitution. Moreover, the first shaping box 3A and the second shaping box 3B are different from the shaping box 3 according to the first embodiment in a point of presence of the insertion hole 18. Moreover, the first shaping box 3A accommodates the formed shaped object PI and an unnecessary powder M2 not solidified or not constituting the shaped object PI therein. Moreover, the second shaping box 3B does not accommodate anything but the stage 4.

A rail support table 57 is provided on one surface on an upper part of the wall portion 55 in the vertical direction in the shaping chamber 52. Similarly, a rail support table 58 is provided on one surface on the upper part of the wall portion 55 in the vertical direction in the treatment chamber 53.

The conveying mechanism 80 is installed on the rail support table 57 of the shaping chamber 52 and on the rail support table 58 of the treatment chamber 53. The conveying mechanism 80 has a first deck 71A, a second deck 71B, a shaping-side rail 81, a processing-side rail 83, a retreat rail 84, and a connecting rail 85.

Since the first deck 71A and the second deck 71B have the same constitution, only the first deck 71A will be described here. The first deck 71A is formed into a container shape with an upper part in the vertical direction open. The first shaping box 3A and the second shaping box 3B are placed on the first deck 71A. In the first deck 71A, insertion holes to which the elevating arms 36A and 36B of the stage moving mechanisms 5A and 5B are inserted are provided. Moreover, on a surface on a side opposite to the surface on which the first shaping box 3A and the second shaping box 3B are placed in the first deck 71A, a deck elevating mechanism 72A is provided. The deck elevating mechanism 72A elevates/moves the first deck 71A along the vertical direction.

Moreover, on an end portion on a side opposite to the first deck 71A in the deck elevating mechanism 72A, a deck slide member 73A is provided. The deck slide member 73A is slidably engaged with the shaping-side rail 81, the processing-side rail 83, the retreat rail 84, and the connecting rail 85.

The shaping-side rail 81 is provided on the rail support table 57 of the shaping chamber 52. The shaping-side rail 81 extends substantially in parallel with the X-direction on a lower part of the attachment hole 67A in the vertical direction in the box support body 66A.

The processing-side rail 83, the retreat rail 84, and the connecting rail 85 are provided on the rail support table 58 of the treatment chamber 53. The processing-side rail 83 extends substantially in parallel with the X-directions on the lower part of the attachment hole 67B in the vertical direction in the box support body 66B.

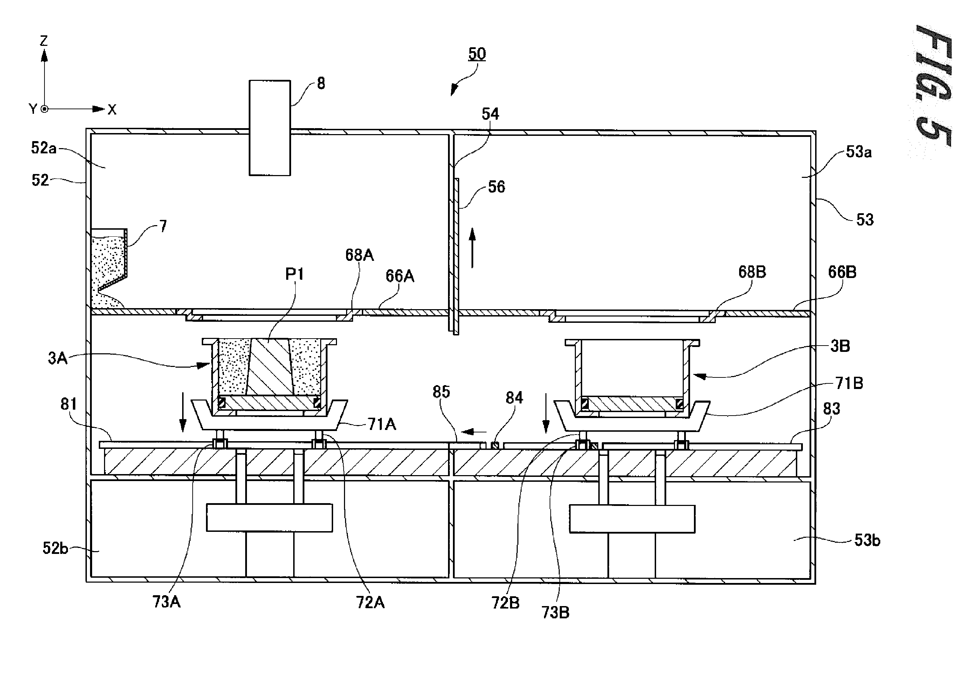

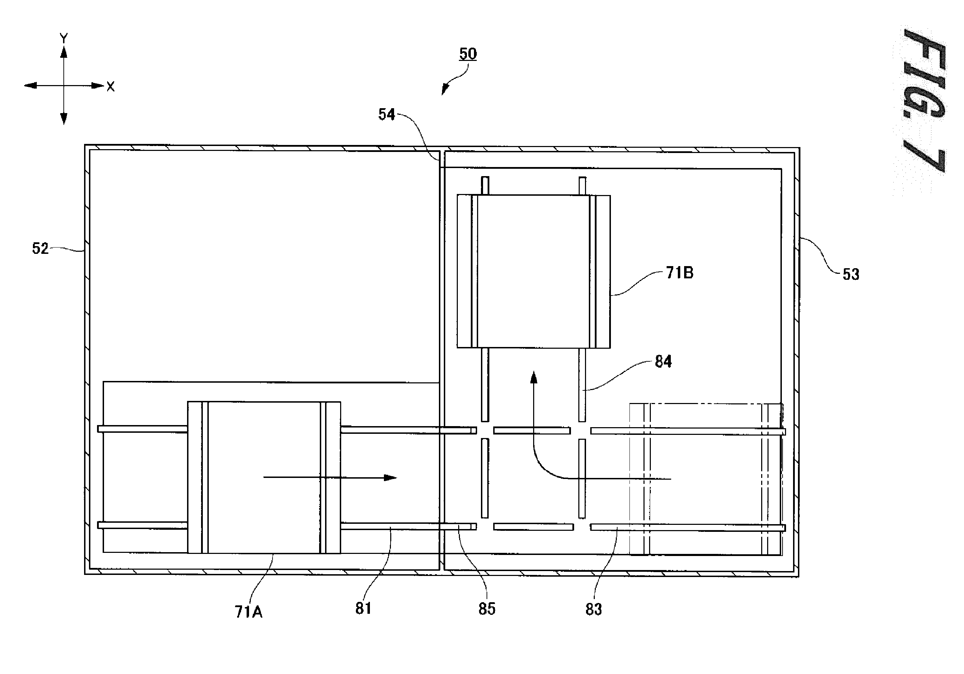

On the end portion in the processing-side rail 83 on the shaping chamber 52 side, the retreat rail 84 is arranged. The retreat rail 84 extends to the other side in the Y-direction (see Fig. 7). The connecting rail 85 is arranged between the processing-side rail 83 and the partition wall 54 as well as the partition door 56. The connecting rail 85 is constituted capable of being expanded/contracted and is connected to the shaping-side rail 81 when the partition door 56 is opened (see Fig. 5).

Subsequently, a replacing operation of the shaping box in the three-dimensional additive manufacturing device 50 according to the second embodiment will be described by referring to Figs. 3 to 10.

Figs. 3 to 10 are explanatory views for describing the replacing operation of the shaping box.

Here, as illustrated in Fig. 3, the first shaping box 3A accommodates the completed shaped object PI and the unnecessary powder M2. On the other hand, the second shaping box 3B has only the stage 4 movably fitted therewith and has nothing

### accommodated therein.

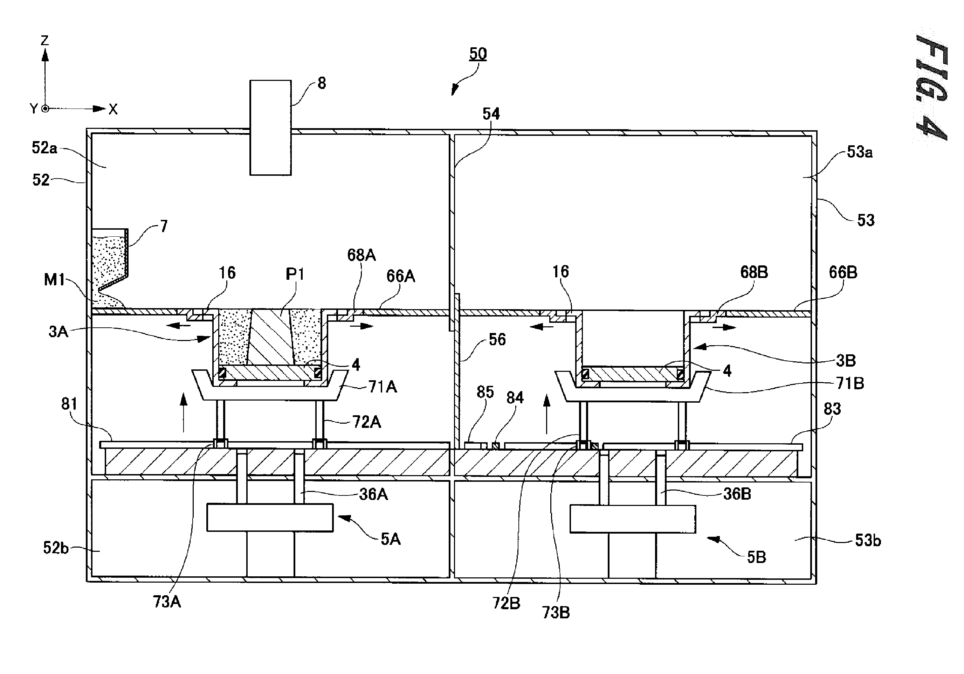

First, as illustrated in Fig. 4, on the shaping chamber 52 side, the stage moving mechanism 5A is driven to move the elevating arm 36A downward in the vertical direction and the connection between the elevating arm 36A and the stage 4 arranged in the first shaping box 3A is released. Then, the deck elevating mechanism 72A is driven to move the first deck 71A upward in the vertical direction. Moreover, the pair of chuck members 68A of the box support body 66A are moved horizontally in directions separated away from each other. As a result, the first shaping box 3A is removed from the box support body 66A, and the first shaping box 3A is placed on the first deck 71A.

On the treatment chamber 53 side, the deck elevating mechanism 72B is driven to move the second deck 71B upward in the vertical direction. Moreover, the pair of chuck members 68B of the box support body 66B are moved in the directions separated away from each other, and the second shaping box 3B is removed from the box support body 66B. Then, the second shaping box 3B is placed on the second deck 71B.

Subsequently, as illustrated in Fig. 5, the deck elevating mechanisms 72A and 72B are driven to move the first deck 71A and the second deck 71B downward in the vertical direction. Moreover, the partition door 56 is moved to open the opening of the partition wall 54. Subsequently, by means of expansion of the connecting rail 85 along the X-direction, the shaping-side rail 81 and the processing-side rail 83 are connected through the connecting rail 85.

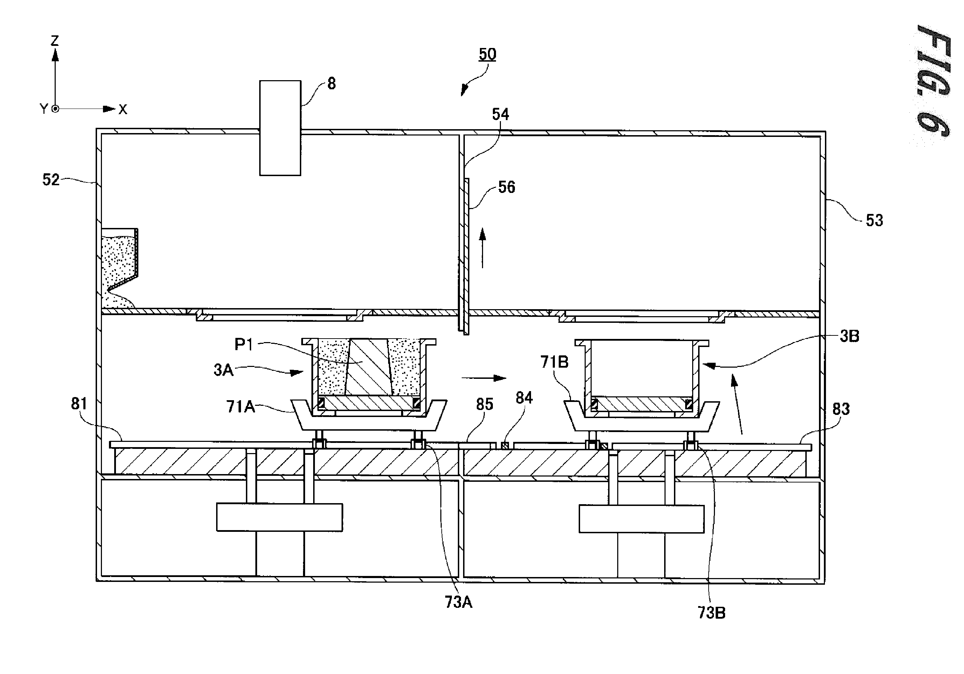

Subsequently, as illustrated in Fig. 6, the deck slide member 73A of the first deck 71A slides from the shaping chamber 52 toward the treatment chamber 53 side along the shaping-side rail 81, the connecting rail 85, and the processing-side rail 83 in a state in which the first shaping box 3A is placed on the first deck 71A. Thus, the first shaping box 3A is conveyed from the shaping chamber 52 to the treatment chamber 53 side.

At this time, the deck slide member 73B of the second deck 71B slides along the processing-side rail 83 and the retreat rail 84. Thus, as illustrated in Fig. 7, the second deck 71B is conveyed from the processing-side rail 83 to the retreat rail 84 which is a retreat position. Then, when the first deck 71A is conveyed to the processing-side rail 83 beyond the retreat rail 84, the second deck 71B is conveyed from the retreat real 84 to the connecting rail 85. As described above, by retreating the second deck 71B and by providing the retreat rail 84, conveying processing of the first deck 71A and the second deck 71B can be performed smoothly. Then, the second deck 71B is conveyed to the shaping chamber 52 through the connecting rail 85 and the shaping-side rail 81.

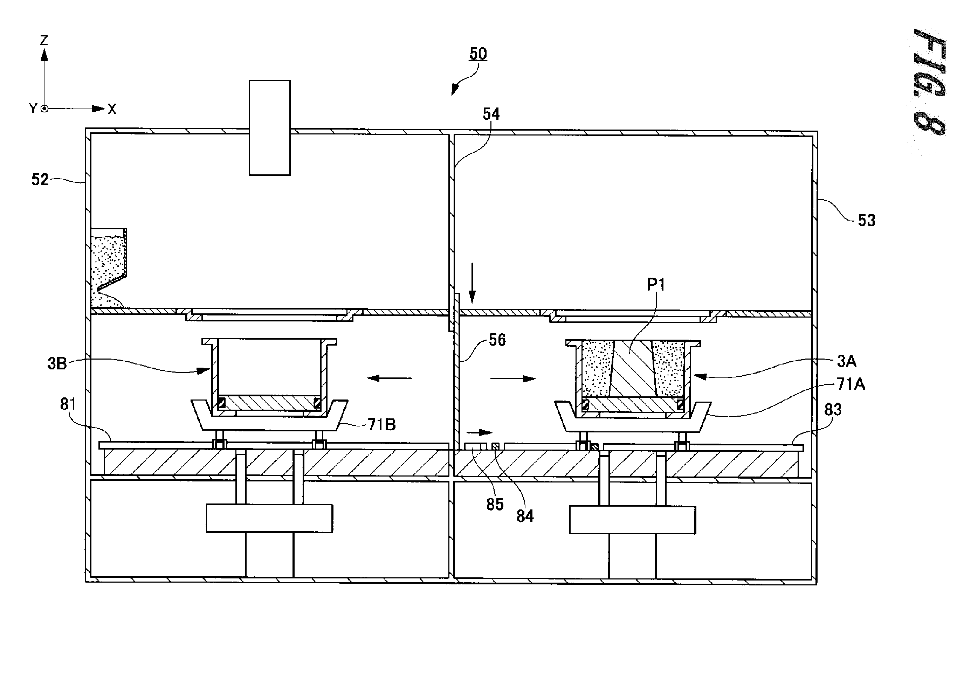

As illustrated in Fig. 8, when the first shaping box 3A is conveyed to the treatment chamber 53 together with the first deck 71A and the second shaping box 3B is conveyed to the shaping chamber 52 together with the second deck 71B, the connecting rail 85 is contracted, and the connection between the shaping-side rail 81 and the processing-side rail 83 is released. Then, the opening of the partition wall 54 is closed by the partition door 56. As a result, the internal space of the shaping chamber 52 and the internal space of the treatment chamber 53 are partitioned again.

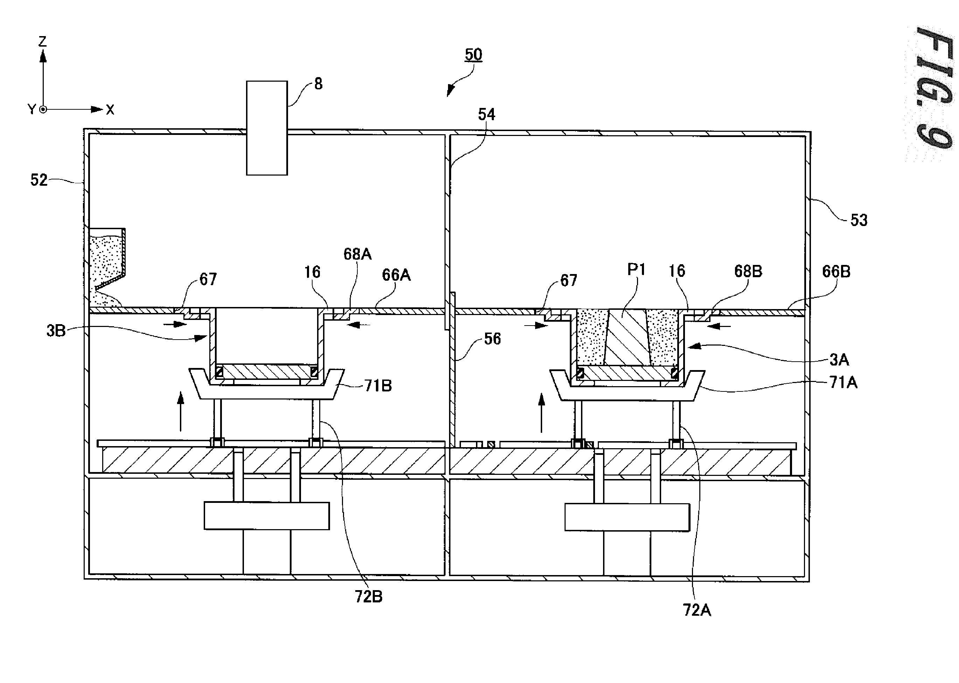

As illustrated in Fig. 9, when the second shaping box 3B placed on the second deck 71B is arranged on the lower part of the attachment hole 67A of the box support body 66A in the vertical direction in the shaping chamber 52, the second shaping box 3B is raised by the deck elevating mechanism 72B to a predetermined position together with the second deck 71B. Similarly, when the first shaping box 3A placed on the first deck 71A is arranged on the lower part of the attachment hole 67B of the box support body 66B in the vertical direction in the treatment chamber 53, the first shaping box 3A is raised by the deck elevating mechanism 72A to a predetermined position together with the first deck 71A.

Subsequently, the pair of chuck members 68A of the box support body 66A in the shaping chamber 52 move to directions approaching each other. Similarly, the pair of chuck members 68B of the box support body 66B in the treatment chamber 53 move in the directions approaching each other. As a result, the second shaping box 3B is attached to the box support body 66A of the shaping chamber 52, and the first shaping box 3A is attached to the box support body 66B of the treatment chamber 53.

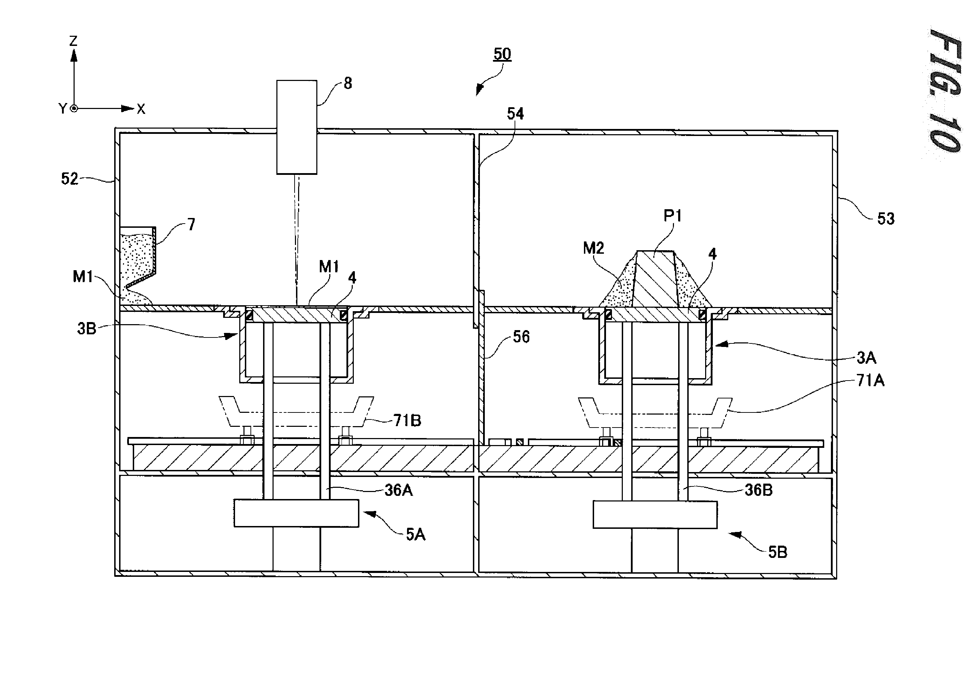

Subsequently, as illustrated in Fig. 10, the deck elevating mechanisms 72A and 72B are driven to move the first deck 71A and the second deck 71B downward in the vertical direction. Moreover, by driving the stage moving mechanism 5A on the shaping chamber 52 side to move the elevating arm 36A upward in the vertical direction, the elevating arm 36A and the stage 4 provided on the second shaping box 3B are connected to each other. Moreover, by driving the stage moving mechanism 5B on the treatment chamber 53 side to move the elevating arm 36B in the vertical direction, the elevating arm 36B and the stage 4 provided on the first shaping box 3A are connected to each other.

Subsequently, in the shaping chamber 52, fabrication of the subsequent shaped object is performed on the second shaping box 3B. Moreover, on the treatment chamber 53 side, the stage moving mechanism 5B is further driven to move the stage 4 to the upper surface of the first shaping box 3A. As a result, the completed shaped object PI is pushed out of the first shaping box 3A. At this time, the unnecessary powder M2 is pushed out of the first shaping box 3A to an outside together with the shaped object PI, but since it is in the treatment chamber 53, the shaping chamber 52 is not stained.

Moreover, according to the three-dimensional additive manufacturing device 50 according to the second embodiment, when the first shaping box 3A and the second shaping box 3B are to be replaced, the vacuum portion 52a of the shaping chamber 52 is made to communicate with the processing portion 53a of the treatment chamber 53, but the inside of the processing portion 53a is also maintained in vacuum. Thus, when the shaping box is replaced, too, the vacuum state of the vacuum portion 52a of the shaping chamber 52 can be maintained, and shaping processing can be performed continuously in the shaping chamber 52. Moreover, since the inside of the processing portion 53a is also maintained in vacuum, even if the unnecessary powder M2 is pushed out into the processing portion 53a, oxidation of the unnecessary powder M2 can be suppressed, and the powder can be re-used easily.

Moreover, by providing the treatment chamber 53 for performing secondary processing adjacent to the shaping chamber 52, it is possible to reduce time required for a replacement work of the shaping box. Moreover, it is possible to perform the secondary processing on the shaped object PI in the treatment chamber 53 while performing the shaping processing in the shaping chamber 52, and to improve a throughput from the shaping to the secondary processing.

### 2-2. Use examples of treatment chamber

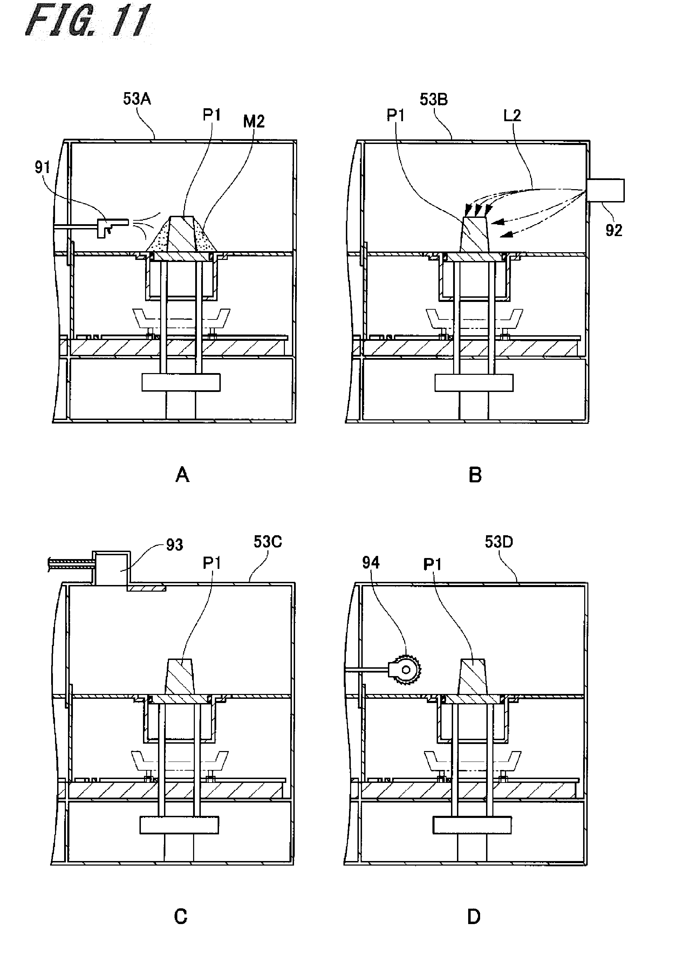

Subsequently, use examples of the treatment chamber according to the second embodiment of the present invention will be described by referring to Figs. 11A to 11D.

Figs. 11A to 11D are explanatory views illustrating the use examples of the treatment chamber.

In a treatment chamber 53A illustrated in Fig. 11A, a gas injection portion 91 for injecting an inert gas at a high pressure is provided. In the treatment chamber 53A, blast processing for removing the unnecessary powder M2 is performed by blowing the inert gas from the gas injection portion 91 to the shaped object P1.

In a treatment chamber 53B illustrated in Fig. 11B, an electron gun 92 for secondary processing for emitting an electron beam L2 is provided. In the treatment chamber 53B, by irradiating the shaped object PI with the electron beam L2 from the electron gun 92 for secondary processing, the surface of the shaped object PI is heated, and the secondary processing is performed.

In a treatment chamber 53C illustrated in Fig. 11C, a cooling gas introduction portion 93 is provided. In this treatment chamber 53C, cooling processing for the shaped object PI is performed. Moreover, in a treatment chamber 53D illustrated in Fig. 11D, a milling device 94 is provided. In this treatment chamber 53D, secondary working processing is performed on the shaped object PI by using the milling device 94.

The use examples of the treatment chamber are not limited to those described above but other various types of secondary processing are performed on the shaped object P1. For example, the above-described gas injection portion 91, the electron gun 92 for secondary processing, the cooling gas introducing portion 93, and the milling device 94 may be all provided in the one treatment chamber. Moreover, a secondary processing device composed of the gas injection portion 91, the electron gun 92 for secondary processing, the cooling gas introducing portion 93, and the milling device 94 illustrated in Figs. 11A to 11D may be combined as appropriate.

Moreover, the example in which the deck and the rail are used is described as the conveying mechanism 80, but the constitution of the conveying mechanism is not limited to that. For example, a conveying mechanism having a conveying arm sandwiching the first shaping box 3A and the second shaping box 3B or other various conveying mechanisms may be also applied.

Since the other constitutions are similar to those of the three-dimensional additive manufacturing device 1 according to the first embodiment, the explanation thereof is omitted. By means of the three-dimensional additive manufacturing device 50 having such constitution, too, the working effect similar to that of the three-dimensional additive manufacturing device 1 according to the above-described first embodiment can be obtained.

### 3. Third embodiment

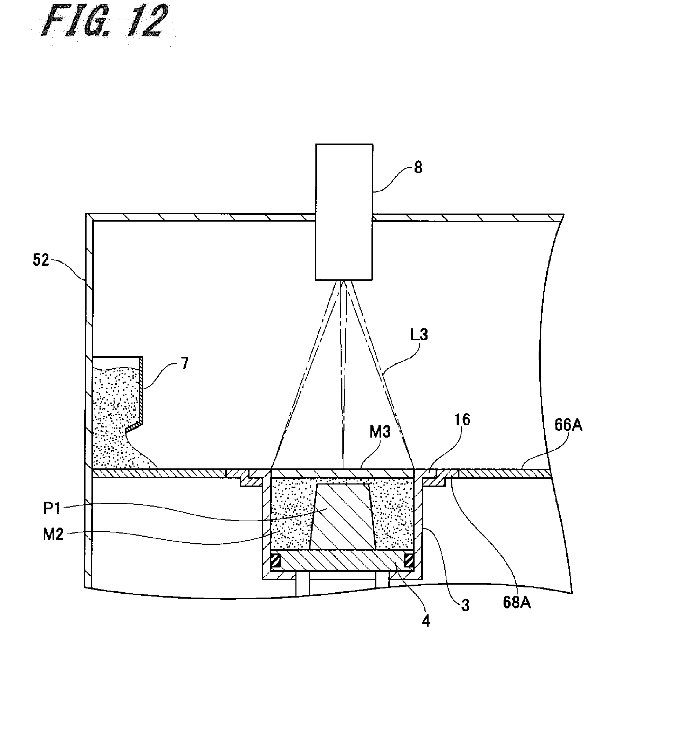

Subsequently, a third embodiment of the present invention will be described by referring to Fig. 12.

Fig. 12 is an explanatory view illustrating a three-dimensional additive manufacturing method according to the third embodiment.

This third embodiment relates to a three-dimensional additive manufacturing method, and a constitution of a three-dimensional additive manufacturing device is similar to those of the three-dimensional additive manufacturing device 1 according to the first embodiment and the three-dimensional additive manufacturing device 50 according to the second embodiment. Thus, for the constitution of the device, here, the three-dimensional additive manufacturing device 50 according to the second embodiment will be used for describing only its three-dimensional additive manufacturing method.

As illustrated in Fig. 12, in the three-dimensional additive manufacturing method according the third embodiment, first, the shaped object PI is formed on the shaping box 3 and the one surface of the stage 4 in the shaping chamber 52. Since contents of the forming process are the same as those in the above-described process, the explanation will be omitted. After the forming process of the shaped object PI is completed, the stage 4 is further moved downward in the vertical direction by the stage moving mechanism. Then, by using the powder laminating portion 7 above the shaped object PI, a plurality of layers of the metal powder M1 is spread. As a result, the opening on the upper end side of the cylinder portion 15 of the shaping box 3 is closed by the metal powder M1.

Subsequently, an electron beam L3 is emitted from the electron gun 8 to the metal powder M1 closing the opening on the upper end side of the cylinder portion 15. Here, the entire metal powder M1 closing the opening on the upper end side of the cylinder portion 15 is irradiated with the electron beam L3. Thus, the entire metal powder M1 closing the opening on the upper end side of the cylinder portion 15 is molten and solidified when predetermined time has elapsed. As a result, the opening on the upper end side of the cylinder portion 15 is closed by a solidified metal powder (hereinafter referred to as a "solidified powder") M3.

Subsequently, the whole shaping box 3 in a state in which the opening on the upper end side of the cylinder portion 15 is closed by the solidified powder M3 is conveyed from the shaping chamber 52. Since the contents of the conveying process are the same as those of the above-described process, the explanation will be omitted.

According to the three-dimensional additive manufacturing method according to this third embodiment, when the shaping box 3 is to be conveyed, the opening on the upper end in the shaping box 3 in the axial direction is closed by the solidified powder M3, while an opening on the other end in the axial direction is closed by the stage 4. Thus, the shaped object PI and the unnecessary powder M2 can be sealed in the shaping box 3. As a result, when the shaping box 3 is conveyed, drop of the unnecessary powder M2 from the opening of the cylinder portion 15 of the shaping box 3 can be prevented. Moreover, contact between the unnecessary powder M2 and the outside air can be suppressed, and oxidation of the unnecessary powder M2 can be prevented more effectively. Moreover, since the opening of the cylinder portion 15 of the shaping box 3 is closed by the solidified powder M3, when the shaping chamber 52 is opened to the atmosphere, explosion of the metal powder in the shaping box 3 can be prevented.

The present invention is not limited to the above-described embodiments illustrated in the figures but is capable of various variations in practice within a range not deviating from the gist of the invention described in the claims.

For example, in the above-described embodiments, the example in which the metal powder such as titanium, aluminum or iron is applied as the powder sample is described but this is not limiting, and a resin or the like may be used as the powder sample. Moreover, the example in which the electron gun irradiating the electron beam is applied as a melting mechanism for melting the powder sample is described, but this is not limiting, and a laser irradiation portion irradiating a laser may be applied, for example, as the melting mechanism.

1, 50; three-dimensional additive manufacturing device, 2, 52; shaping chamber, 3; shaping box, 4; stage, 5, 5A, 5B; stage moving mechanism, 6, 66A, 66B; box support portion, 7; powder laminating portion, 8; electron gun (melting mechanism), 11; stage support body, 13, 67A, 67B; attachment hole, 13a; support portion, 15; cylinder portion, 16; outer flange portion, 17; stopper, 18; insertion hole, 22; stage-side connecting portion (connecting mechanism), 26; guide portion, 27; slide member, 33; connecting block (connecting mechanism), 9, 32; second electron gun, 11; first electron beam control portion, 12, 33; second electron beam control portion, 52a; vacuum portion, 53, 53A, 53B, 53C, 53D; treatment chamber, 53a; processing portion, 54; partition wall, 55; partition door, 68A, 68B; chuck member (support portion), 71A; first deck, 71B; second deck, 72A, 72B; deck elevating mechanism, 80, 100; conveying mechanism, 101; conveying arm, M1; metal powder, M2; unnecessary powder, M3; solidified powder, PI; shaped object

## Claims

1. A three-dimensional additive manufacturing device comprising:
a hollow shaping chamber in which processing for forming a shaped object is performed;
a shaping box accommodating the shaped object and a powder sample for forming the shaped object;
a stage adapted to be fitted with an inside of the shaping box movably in a vertical direction and having the powder sample spread thereon; and
a box support body provided inside the shaping chamber and adapted to detachably support the shaping box.

2. The three-dimensional additive manufacturing device according to claim 1, further comprising:
a stage moving mechanism adapted to move the stage in the vertical direction; and
a connecting mechanism adapted to detachably connect the stage moving mechanism and the stage.

3. The three-dimensional additive manufacturing device according to claim 1 or 2, wherein
the shaping box is formed into a cylindrical shape with both ends in the vertical direction open; and
a stopper brought into contact with the stage is provided on a lower end of the shaping box in the vertical direction.

4. The three-dimensional additive manufacturing device according to any one of claims 1 to 3, further comprising:
a treatment chamber provided adjacent to the shaping chamber and configured to perform secondary processing on the shaped object.

5. The three-dimensional additive manufacturing device according to any one of claims 1 to 4, further comprising:
a conveying mechanism adapted to convey the shaping box from the shaping chamber to the treatment chamber.

6. A three-dimensional additive manufacturing method comprising the steps of:
forming a shaped object inside a shaping chamber and accommodating the shaped object and a powder sample forming the shaped object inside a shaping box; and
removing the shaping box accommodating the shaped object and the powder sample from a box support body detachably supporting the shaping box.

7. The three-dimensional additive manufacturing method according to claim 6, further comprising the steps of:
spreading the powder sample above the shaped object in a vertical direction after the step of accommodating the shaped object and the powder sample inside the shaping box;
melting the spread powder sample and closing an opening on an upper end in the shaping box in the vertical direction by solidification; and
removing the shaping box after the step of closing the opening on the upper end in the shaping box in the vertical direction.
